(19)

**Europäisches Patentamt**
**European Patent Office**
**Office européen des brevets**

(11) **EP 4 454 460 B1**

(12) **EUROPEAN PATENT SPECIFICATION**

(45) Date of publication and mention
of the grant of the patent:
**22.07.2026 Bulletin 2026/30**

(21) Application number: **22911962.3**

(22) Date of filing: **22.12.2022**

(51) International Patent Classification (IPC):
*A01N 37/44* $^{(2006.01)}$   *A01N 43/36* $^{(2006.01)}$
*A01N 43/50* $^{(2006.01)}$   *A01P 21/00* $^{(2006.01)}$

(52) Cooperative Patent Classification (CPC):
**A01N 43/50; A01N 37/44; A01N 43/36; A01P 21/00**

(86) International application number:
**PCT/KR2022/021041**

(87) International publication number:
**WO 2023/121329 (29.06.2023 Gazette 2023/26)**

(54) **USE OF A COMPOSITION FOR PROMOTING PLANT DISEASE RESISTANCE**

VERWENDUNG EINER ZUSAMMENSETZUNG ZUR FÖRDERUNG DER RESISTENZ GEGEN
PFLANZENKRANKHEITEN

UTILISATION D'UNE COMPOSITION PERMETTANT DE FAVORISER LA RÉSISTANCE AUX
MALADIES DE PLANTES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **22.12.2021 KR 20210185259**

(43) Date of publication of application:
**30.10.2024 Bulletin 2024/44**

(73) Proprietor: **CJ CheilJedang Corporation**
**Seoul 04560 (KR)**

(72) Inventors:
• **SONG, Gun Chul**
  **Seoul 04560 (KR)**
• **YUN, Yeo Hong**
  **Seoul 04560 (KR)**
• **LEE, Mi Rong**
  **Seoul 04560 (KR)**

• **SON, Ju Yeon**
  **Seoul 04560 (KR)**

(74) Representative: **Icosa**
  **83 avenue Denfert-Rochereau**
  **75014 Paris (FR)**

(56) References cited:
**WO-A1-2021/187152     CN-A- 1 069 719
CN-A- 111 631 219     KR-A- 20110 096 109**

• **KADOTANI NAOKI, AKAGI AYA, TAKATSUJI
HIROSHI, MIWA TETSUYA, IGARASHI DAISUKE:
"Exogenous proteinogenic amino acids induce
systemic resistance in rice", BMC PLANT
BIOLOGY, vol. 16, no. 1, 1 December 2016
(2016-12-01), XP093074353, DOI: 10.1186/
s12870-016-0748-x**

## Description

## [Technical Field]

The present disclosure relates to a method of enhancing plant disease resistance, a method of preventing or treating a plant disease, use in enhancing plant disease resistance, use in preventing or treating a plant disease, a method of controlling a plant disease, and use in controlling a plant disease, all of which with a composition containing amino acids.

[Background Art]

Plants have developed signaling systems that effectively respond to changes in the external environment. For example, when a plant is exposed to a pathogen, resistance-related genes are expressed and signaling systems may be activated as resistance responses. In addition, jasmonic acid, ethylene, and salicylic acid, which are known as plant hormones, play a major role in transmitting disease resistance (induced resistance) from the site of infection to the plant systemically. Salicylic acid and jasmonic acid, either in their derivative forms or in their original form, move within the plant and induce systemic resistance responses. By inducing these systemic responses, resistance responses are induced not only in leaves invaded by pathogens but also throughout the entire plant that has not been invaded.

In this regard, derivatives that induce various resistance responses, in addition to pathogens, have been reported. Among them, benzo(1,2,3)-thiadiazile-7-carbothioic acid S-methyl ester (BTH, benzothiadiazole) is known as a substance exhibiting the most powerful effect. However, when BTH was treated, a serious problem was found, such as inhibition of plant growth or significant reduction of yields. According to later research, this problem was known to be due to a lack of energy for growth, as BTH consumes excessive energy in plants by expressing many resistance genes in plants even in the absence of pathogens. Therefore, there is an urgent need to develop a substance that has a similar effect to BTH in inducing systemic resistance responses and does not inhibit plant growth.

Further, agricultural and horticultural microbicide and insecticide including some compounds have been studied (US 10123537 B2). However, the development of substances that induce systemic resistance responses without inhibiting plant growth is still insignificant. Kadotani Naoki et al.: "Exogenous proteinogenic amino acids induce systemic resistance in rice", BMC Plant Biology, vol. 16, no. 1, 1 December 2016, describes the use of glutamate to improve the resistance of rice against rice blast in leaves. CN 1 11 631 219 proposes the use against cucumber leaf blight and low temperature resistance of a composition containing i.a. glycine, glutamic acid and proline.

## [Disclosure]

## [Technical Problem]

The problem to be solved in the present disclosure is to provide the use of a composition including amino acids for enhancing plant disease resistance, a method of enhancing plant disease resistance using the same, a method of preventing or treating a plant disease, use in enhancing plant disease resistance, use in preventing or treating a plant disease, the use of a a composition including amino acids for controlling a plant disease, a method of controlling a plant disease using the same, and use in controlling a plant disease.

## [Technical Solution]

The present invention relates to:

- the use of amino acids or a composition comprising amino acids for enhancing plant disease resistance, wherein the amino acids and the plant disease are one of the following combinations: i) the amino acids are any one or more selected from the group consisting of isoleucine and valine, and the plant disease is any one or more selected from the group consisting of leaf spot, bacterial soft rot, Phytophthora stem and root rot, and bacterial leaf blight; ii) the amino acids are any one or more selected from the group consisting of leucine and proline, and the plant disease is any one or more selected from the group consisting of leaf spot and bacterial soft rot; iii) the amino acids are any one or more selected from the group consisting of glutamic acid, aspartic acid, and histidine, and the plant disease is leaf spot,

- a method of enhancing plant disease resistance, the method comprising the step of treating a plant body with a composition for enhancing plant disease resistance, wherein the composition comprises amino acids, wherein the amino acids and the plant disease are one of the following combinations: i) the amino acids are any one or more selected from the group consisting of isoleucine and valine, and the plant disease is any one or more selected from the group consisting of leaf spot, bacterial soft rot, Phytophthora stem and root rot, and bacterial leaf blight; ii) the amino acids are any one or more selected from the group consisting of leucine and proline, and the plant disease is any one or more selected from the group consisting of leaf spot and bacterial soft rot; iii) the amino acids are any one or more selected from the group consisting of glutamic acid, aspartic acid, and histidine, and the plant disease is leaf spot,

- a method of preventing or treating a plant disease, the method comprising the step of treating a plant body with a composition for enhancing plant disease resistance, wherein the composition comprises amino acids, wherein the amino acids and the plant disease are one of the following combinations: i) the amino acids are any one or more selected from the group consisting of isoleucine and valine, and the plant disease is any one or more selected from the group consisting of leaf spot, bacterial soft rot, Phytophthora stem and root rot, and bacterial leaf blight; ii) the amino acids are any one or more selected from the group consisting of leucine and proline, and the plant disease is any one or more selected from the group consisting of leaf spot and bacterial soft rot; iii) the amino acids are any one or more selected from the group consisting of glutamic acid, aspartic acid, and histidine, and the plant disease is leaf spot,

- the use of amino acids or a composition comprising amino acids for controlling a plant disease, wherein the amino acids and the plant disease are one of the following combinations: i) the amino acids are any one or more selected from the group consisting of isoleucine and valine, and the plant disease is any one or more selected from the group consisting of leaf spot, bacterial soft rot, Phytophthora stem and root rot, and bacterial leaf blight; ii) the amino acids are any one or more selected from the group consisting of leucine and proline, and the plant disease is any one or more selected from the group consisting of leaf spot and bacterial soft rot; iii) the amino acids are any one or more selected from the group consisting of glutamic acid, aspartic acid, and histidine, and the plant disease is leaf spot, and - a method of controlling a plant disease, the method comprising the step of treating a plant body with a composition for controlling a plant disease, wherein the composition comprises amino acids, wherein the amino acids and the plant disease are one of the following combinations: i) the amino acids are any one or more selected from the group consisting of isoleucine and valine, and the plant disease is any one or more selected from the group consisting of leaf spot, bacterial soft rot, Phytophthora stem and root rot, and bacterial leaf blight; ii) the amino acids are any one or more selected from the group consisting of leucine and proline, and the plant disease is any one or more selected from the group consisting of leaf spot and bacterial soft rot; iii) the amino acids are any one or more selected from the group consisting of glutamic acid, aspartic acid, and histidine, and the plant disease is leaf spot.

**[Advantageous Effects]**

There is an effect of enhancing plant disease resistance by using amino acids.

**[Description of Drawings]**

FIG. 1 shows results of investigating induced resistance of 10 kinds of amino acids in a plant model (*Arabidopsis thaliana*);
FIG. 2 shows results of deriving a valine concentration showing the most excellent induced resistance in a plant model;
FIG. 3 shows reduction of pathogens according to treatment of plant models with valine, proline, or isoleucine;
FIG. 4 shows observation of expression levels of disease resistance genes according to treatment of plant models with valine, proline, or isoleucine;
FIG. 5 shows disease control effects of valine or isoleucine treatment in soybeans, cucumbers, lettuce, rice, tomatoes, wheat, barley, and peppers;
FIG. 6 shows disease control effects of valine, proline, or isoleucine treatment in soybeans, cucumbers, and lettuce;
FIG. 7 shows results of examining induced resistance through a hyperspectral camera; and
FIG. 8 shows results of examining growth promoting ability of valine.

**[Detailed Description of Preferred Embodiments]**

An aspect of the present disclosure provides the use of a composition for enhancing plant disease resistance, the composition including amino acids.
In one embodiment, the amino acids of the present disclosure may be treated to a plant at a concentration of 0.0001%(w/w) to 10%(w/w), 0.0001%(w/w) to 5%(w/w), 0.0001%(w/w) to 1%(w/w), 0.005%(w/w) to 10%(w/w), 0.005%(w/w) to 1%(w/w), 0.005%(w/w) to 0.5%(w/w), 0.001%(w/w) to 10%(w/w), 0.001%(w/w) to 1%(w/w), 0.001%(w/w) to 0.5%(w/w), 0.01%(w/w) to 10%(w/w), 0.01%(w/w) to 1%(w/w), 0.01%(w/w) to 0.5%(w/w), 0.05%(w/w) to 10%(w/w), 0.05%(w/w) to 1%(w/w), 0.05%(w/w) to 0.5%(w/w), 0.1%(w/w) to 10%(w/w), 0.1%(w/w) to 1%(w/w), or 0.1%(w/w) to 0.5%(w/w) with respect to the total amount of the composition for enhancing plant disease resistance, a dilution thereof, or a concentrate thereof.
In the present disclosure, the "leaf spot" refers to a disease that causes large or small spots (or specks) on the stem, fruit, or leaves of a plant. The spots may be black, light brown, or brown. The leaf spot may occur in fruit vegetables, but it may occur without being limited to the type of plant. The leaf spot may be caused by several types of fungi or bacteria, and may be caused by a biotrophic pathogen, specifically, microorganisms of the genus *Pseudomonas,* more specifically, *Pseudomonas syringae pv. tomato,* much more specifically, *Pseudomonas syringae pv. tomato DC3000,* but is not limited thereto.

In the present disclosure, the "bacterial soft rot" refers to a disease in which the plant tissue decay occurs to cause a foul odor and rotting. Particularly, it is common in juicy vegetables such as lettuce and napa cabbage, and also appears in tomatoes, sweet potatoes, and potatoes. Thus, bacterial soft rot may occur without being limited to the type of plant. The bacterial soft rot may be caused by a necrotrophic pathogen, specifically, *Pectobacterium carotovorum subsp. carotovorum,* but is not limited thereto.

In the present disclosure, the "Phytophthora stem and root rot" is a type of fungal disease that occurs in potatoes or tomatoes, etc., and external symptoms are slightly different depending on the degree of infection. During the active growth period, the plant is stunted, the lower leaves appear reddish-brown, and young leaves may turn yellow to show various colors. When the infection is not severe, external symptoms are often unclear, and a diseased head produces small fruits and poor stolon. The Phytophthora stem and root rot may occur in fruit vegetables, but may occur without being limited to the type of plant. The Phytophthora stem and root rot is caused by a pathogen that is a fungus of the genus *Phytophthora* belonging to the family *Pythiaceae* of flagellated fungi, and may be specifically caused by *Phytophthora sojae,* but is not limited thereto.

In the present disclosure, the "bacterial leaf blight" refers to a disease in which the disease pattern appears as spots and turns brown. The disease pattern may be formed on leaves, stems, pods, petioles, and cotyledons, etc. It may occur without being limited to the type of plant, such as beans, mung beans, or fruit vegetables, etc. The leaf blight is caused by microorganisms of the genus *Pseudomonas,* specifically, *Pseudomonas syringae pv. lachrymans,* but is not limited thereto.

In one embodiment, the plant disease may be caused by any one or more selected from the group consisting of *Pseudomonas syringae pv. tomato, Pectobacterium carotovorum subsp. carotovorum, Phytophthora sojae,* and *Pseudomonas syringae pv. lachrymans.*

In one embodiment, the plant disease may be any one or more selected from the group consisting of leaf spot caused by *Pseudomonas syringae pv. Tomato,* bacterial soft rot caused by *Pectobacterium carotovorum subsp. Carotovorum,* soybean Phytophthora stem and root rot caused by *Phytophthora sojae,* cucumber bacterial soft rot caused by *Pseudomonas syringae pv. lachrymans,* lettuce bacterial soft rot caused by *Pectobacterium carotovorum subsp. carotovorum.*

The plant disease may occur in any type of plant, but in one embodiment, the plant may be selected from the group consisting of legumes, fruit vegetables, leafy vegetables, and grains.

In the present disclosure, the "legumes" refers to a plant of the family *Fabaceae* which is used as foods or feeds. For example, soybeans, wild soybeans, kidney beans, black beans, peas, red beans, peanuts, cowpeas, etc. may be included. Specifically, the legumes may be soybeans, but are not limited thereto.

In the present disclosure, the "fruit vegetables" refers to vegetables intended for the use of fruit, based on the part of the vegetable used. For example, peppers, cucumbers, tomatoes, watermelons, strawberries, oriental melons, etc. may be included. Specifically, the fruit vegetables may be peppers, cucumbers, or tomatoes, but are not limited thereto.

In the present disclosure, the "leafy vegetables" refers to vegetables intended for the use of leaves, based on the part of the vegetable used. For example, napa cabbage, lettuce, perilla leaves, spinach, etc. may be included. Specifically, the leafy vegetables may be napa cabbage or lettuce, but are not limited thereto.

In the present disclosure, the "grains" refers to cultivated plants of the family *Gramineae* whose seeds are edible. For example, rice, wheat, barley, corn, etc. may be included. Specifically, the grains may be rice, wheat, or barley, but are not limited thereto.

In the present disclosure, the "plant disease resistance" refers to the property of preventing the invasion of pathogens, the property of preventing the development of a plant disease, and/or the property of not getting sick even when pathogens invade.

In a specific embodiment, the amino acids used in the present disclosure may prevent or treat infection of plants with pathogens, and may cause systemic induced resistance in plants, but are not limited thereto.

In a specific embodiment, the amino acids used in the present disclosure may enhance plant disease resistance, and at the same time, may not inhibit plant growth, but are not limited thereto. Specifically, as substances that induce plant disease resistance, pathogens as well as derivatives that induce various resistance responses are known, and some of the substances (e.g., benzo(1,2,3)-thiadiazole-7-carbothioic acid S-methyl ester, benzothiadiazole; BTH) have serious side effects such as inhibiting plant growth or significantly reducing yields. However, the amino acids used in the present disclosure do not inhibit the plant growth, but rather may enhance the plant growth.

The composition used for for enhancing plant disease resistance of the present disclosure may include any agent or product needed to enhance plant disease resistance, such as pesticide preparations, fertilizers, control agents, etc.,

without limitation.

As used herein, the term "pesticide" refers to an agent used for the protection and growth of agricultural crops. Specifically, the pesticide may include preparations for use in controlling diseases, harmful insects, weeds, pathogens, nematodes, mites, etc. that occur during cultivation and storage of agricultural crops, as well as growth regulators for use in promoting or inhibiting the physiological functions of agricultural crops, and supplements for promoting remedial effects.

As used herein, the term "fertilizer", also called manure, refers to a nutrient that fertilizes the soil and promotes the growth of plants. A fertilizer including the composition of the present disclosure may be easily used by mixing with the soil before sowing, and may be applied together when spraying pesticides, etc.

The composition for enhancing plant disease resistance used in the present disclosure may further include substances which are included for enhancing disease resistance commonly used. In addition to the above amino acids, the composition may include, as an excipient, a pharmaceutically acceptable solid carrier, liquid carrier, liquid diluent, liquefied gas diluent, solid diluent or other auxiliaries, e.g., emulsifiers, dispersants, or surfactants such as foaming agents.

The composition used for enhancing plant disease resistance of the present disclosure may be used after being formulated into an agricultural composition by mixing the active ingredient with the excipient, and as a method of formulating the agricultural composition, any method commonly used in the art may be applied.

Further, the composition used for enhancing plant disease resistance of the present disclosure may be provided in the form of wettable powder, granules, powder, emulsion, spray, smoke agent, capsule, and gel, and may be provided in the form of a donut-shaped contact formulation for buoyancy of the composition, but is not limited to thereto.

In one embodiment, the composition used in the present disclosure may be a composition for enhancing plant disease resistance or a composition for controlling a plant disease, the composition including valine, wherein the plant disease may be any one or more selected from the group consisting of leaf spot, bacterial soft rot, Phytophthora stem and root rot, bacterial leaf blight, and rice blast, but is not limited thereto.

In one embodiment, the composition used in the present disclosure may be a composition for enhancing plant disease resistance or a composition for controlling a plant disease, the composition including isoleucine, wherein the plant disease may be any one or more selected from the group consisting of leaf spot, bacterial soft rot, Phytophthora stem and root rot, bacterial leaf blight, and rice blast, but is not limited thereto.

In one embodiment, the composition used in the present disclosure may be a composition for enhancing leaf spot or bacterial soft rot resistance or a composition for controlling the plant disease, the composition including leucine, but is not limited thereto.

In one embodiment, the composition of the present disclosure may be a composition for enhancing leaf spot or bacterial soft rot resistance or a composition for controlling the plant disease, the composition including proline, but is not limited thereto.

In one embodiment, the composition used in the present disclosure may be a composition for enhancing leaf spot resistance or a composition for controlling the plant disease, the composition including any one or more selected from the group consisting of glutamic acid, aspartic acid, and histidine, but is not limited thereto.

Another aspect of the present disclosure provides a method of enhancing plant disease resistance, the method including the step of treating a plant with the composition for enhancing plant disease resistance including amino acids.

In a specific embodiment, the method of enhancing plant disease resistance may promote plant growth, but is not limited thereto.

The amino acids, plant disease, plant disease resistance, and composition for enhancing plant disease resistance are as described in other aspects.

The plant includes all of plant parts, such as roots, stems, leaves, or combinations thereof, and plant types, without limitation. Specifically, the plant may be a plant individual at risk of being infected with a plant disease or infected with a pathogen, but is not limited thereto.

The treatment with the composition for enhancing plant disease resistance may be treatment by spraying, injecting, infusing, or mixing the composition onto the plant, or mixing the composition with the soil. However, as long as the inside or outside of the plant may be contacted with the composition directly or indirectly, it is not limited thereto. Further, the above treatment may be performed at the same time with or at the different time from invasion of a pathogen into the plant, and may be performed before or after invasion of a pathogen into the plant, but is not limited thereto.

The composition for enhancing plant disease resistance may be treated once or twice or more, but is not limited thereto. When treated twice or more, it may be treated at intervals of 3 days to 15 days, 3 days to 10 days, 3 days to 7 days, 4 days to 7 days, 5 days to 7 days, or 6 days, but is not limited thereto.

In one embodiment, the composition for enhancing plant disease resistance may be treated by primary treatment 7 days before pathogen invasion and by secondary treatment 1 day before pathogen invasion, but is not limited thereto.

In one embodiment, the plant may be any one or more selected from the group consisting of legumes, fruit vegetables, leafy vegetables, and grains, but is not limited thereto.

The legumes, fruit vegetables, leafy vegetables, grains, etc. are as described in other aspects.

Still another aspect of the present disclosure provides a method of preventing or treating a plant disease, the method including the step of treating a plant with the composition for enhancing plant disease resistance, the composition including amino acids.

The amino acid, plant disease, plant disease resistance, composition for enhancing plant disease resistance, treatment with the composition for enhancing plant disease resistance, and plant are as described in other aspects.

In the present disclosure, the term "preventing" means all actions by which the occurrence of a plant disease or development thereof is restrained or retarded.

In the present disclosure, the term "treating" means all actions by which a plant disease has taken a turn for the better or been modified favorably. In the present disclosure, the treating may include all actions by which infection with a plant disease pathogen or recurrence of a plant disease is prevented, symptoms are alleviated, the rate of progression is reduced, the disease state is relieved, the disease state is temporarily or continuously alleviated or mitigated, or the prognosis is improved.

Still another aspect of the present disclosure provides the use of a composition for controlling a plant disease, the composition including amino acids as indicated above.

As used herein, the term "disease control" means preventing plants, such as crops, from being damaged by diseases and pests, removing pathogens that have occurred, or preventing the spread of pathogens. The disease control is a series of actions to reduce damage caused by pests, and may include physical (mechanical) control methods, agronomical control methods, chemical control methods, biological control methods, and eco-friendly control methods, but is not limited thereto. The disease control includes not only chemical control of using microbicides or insecticides which are toxic to pests, but also a method of creating an environment unsuitable for pathogens by cultivation of resistant plants, crop rotation, etc., a method of removing pathogens by heat treatment of plants or steam treatment of soil, a method of attracting and killing pests using attractants or sex pheromones.

The composition used for controlling a plant disease of the present disclosure includes any agent or product needed to control the plant disease, such as pesticide preparations, fertilizers, control agents, etc., without limitation.

The composition used for controlling a plant disease of the present disclosure may further include substances which are included for controlling a disease commonly used. In addition to the above amino acids, the composition may further include, as an excipient, a pharmaceutically acceptable solid carrier, liquid carrier, liquid diluent, liquefied gas diluent, solid diluent or other auxiliaries, e.g., emulsifiers, dispersants, or surfactants such as foaming agents.

The composition used for controlling a plant disease of the present disclosure may be used after being formulated into an agricultural composition by mixing the active ingredient with the excipient, and as a method of formulating the agricultural composition, any method commonly used in the art may be applied.

Further, the composition used for controlling a plant disease of the present disclosure may be provided in the form of wettable powder, granules, powder, emulsion, spray, smoke agent, capsule, and gel, and may be provided in the form of a donut-shaped contact formulation for buoyancy of the composition.

Still another aspect of the present disclosure provides a method of controlling a plant disease, the method including the step of treating a plant body with a composition for controlling a plant disease, the composition including amino acids. Specifically, the method of controlling a plant disease may promote plant growth.

The amino acids, plant, plant body, plant disease, disease control, composition for controlling a plant disease, etc. are as described in other aspects.

The treatment with the composition for controlling a plant disease may be treatment by spraying, injecting, infusing, or mixing the composition onto the plant body, or mixing the composition with the soil. However, as long as the inside or outside of the plant body may be contacted with the composition, it is not limited thereto. Further, the above treatment may be performed at the same time with or at the different time from invasion of a pathogen into the plant, and may be performed before or after invasion of a pathogen into the plant, but is not limited thereto.

The composition used for controlling a plant disease may be treated once or twice or more, but is not limited thereto. When treated twice or more, it may be treated at intervals of 3 days to 15 days, 3 days to 10 days, 3 days to 7 days, 4 days to 7 days, 5 days to 7 days, or 6 days, but is not limited thereto.

In one embodiment, the composition used for controlling a plant disease may be treated by primary treatment 7 days before pathogen invasion and by secondary treatment 1 day before pathogen invasion, but is not limited thereto.

Still another aspect of the present disclosure provides use of the amino acids or the composition including the same in enhancing plant disease resistance; use in controlling a plant disease; and use in preventing or treating a plant disease.

The amino acids, plant disease, plant disease resistance, disease control, preventing, treating, etc. are as described in other aspects.

**[Mode for Carrying Out the Invention]**

Hereinafter, the present disclosure will be described in more detail by way of exemplary embodiments.

In the following examples, only situations combining:

- isoleucine or valine with leaf spot, bacterial soft rot, Phytophthora stem or root rot, or bacterial leaf blight;
- leucine or proline with leaf spot or bacterial soft rot; or
- glutamic acid, aspartic acid, or histidine with leaf spot

are representative of the present invention.

**Example 1. Verification of induced resistance of amino acids against plant disease**

To verify induced resistance of various amino acids against plant diseases, a plant model *Arabidopsis thaliana* was used, and as pathogens, *Pseudomonas syringae pv. tomato* DC3000 (hereinafter, referred to as Pst) known to cause leaf spot and *Pectobacterium carotovorum subsp. carotovorum* SCC1 (hereinafter, referred to as Pcc) known to cause bacterial soft rot were used.

To grow the plant model, the surface of *Arabidopsis thaliana* seeds was sterilized by immersing them in 3% sodium hypochlorite (NaOCl) for 5 minutes. Thereafter, the seeds were rinsed five times using sterile water and then sown on 1/2 Murashige and Skoog (MS) medium (0.6% agar, 1.5% sucrose, pH 5.8). 3 days later, when the seeds germinated, each six of the germinated seeds were transplanted onto plates (Falcon, USA) and cultured in a plant incubator (a light condition of 12 hours and a temperature condition of 23°C).

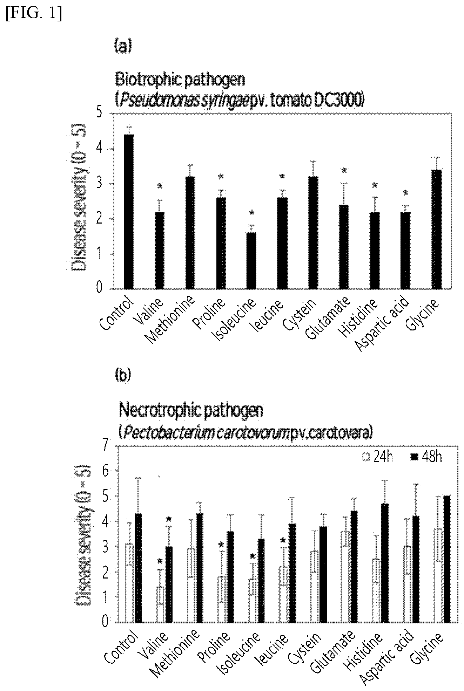

Two weeks after transplanting, 50 $\mu$l of each of 10 amino acids at a concentration of 0.1% was applied to the roots of each plant body. 7 days after amino acid treatment, five leaves of each plant body were treated with each 2 $\mu$l of $1 \times 10^8$ cfu/ml of Pst (biotrophic, FIG. 1A) and Pcc (necrotrophic, FIG. 1B) pathogens.

The Pst pathogen was cultured at 30°C for 48 hours on a King's B (KB) solid medium before treatment. With regard to the Pst pathogen, disease severity was observed 7 days after treatment with the pathogen, and the disease severity of each leaf was scored from 0 to 5, based on the following criteria, and the average value was calculated; - 0=no symptoms, 1=mild chlorosis symptoms, 2=chlorosis symptoms, 3=chlorosis symptoms and mild necrosis, 4=necrosis and 5=severe necrosis symptoms.

The Pcc pathogen was cultured at 30°C for 48 hours on a Luria-Bertani broth (LB) solid medium before treatment. With regard to the Pcc pathogen, disease severity of each leaf was observed 24 hours and 48 hours after treatment with the pathogen, and the disease severity was scored from 0 to 5, based on the following criteria, and the average value was calculated; -0=no symptoms, 1=slight soft rot symptoms at the pathogen infection site, 2=soft rot symptoms at the pathogen infection site, 3=severe soft rot symptoms at the pathogen infection site, 4=soft rot symptoms around the pathogen infection site, 5=soft rot symptoms throughout the leaf.

Amino acids showing the induced resistance effects against diseases were selected as having statistical significance, as compared to a water-treated control group.

As a result, it was confirmed that seven amino acids of valine, proline, isoleucine, leucine, glutamic acid, histidine, and aspartic acid induced the resistance against Pst (FIG. 1A), and four amino acids of valine, proline, isoleucine, and leucine induced the resistance against Pcc (FIG. 1B).

In particular, it was confirmed that valine's disease resistance persisted even after 48 hours of Pcc pathogen treatment. It was also confirmed that valine, proline, isoleucine, and leucine cause induced resistance against both the biotrophic pathogen Pst and the necrotrophic pathogen Pcc in plants.

**Example 2. Additional verification of amino acids that cause induced resistance against plant disease**

The induced resistance effect was confirmed again using valine which showed the best induced resistance against Pcc and Pst in Example 1.

Valine was used at concentrations of 0.5%, and 0.1%, 0.05%, 0.01%, 0.005% and 0.001%, and Pst was used as the pathogen. All other methods are the same as the experimental method in Example 1.

As a selection criterion, it was evaluated whether groups treated with different concentrations of valine showed a statistical difference ($p<0.05$) in the induced resistance against disease, as compared to a water-treated group.

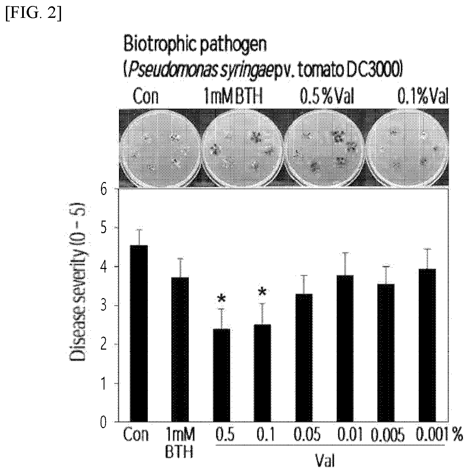

As a result, overall disease severity decreased in the valine-treated groups, and furthermore, the 0.5% and 0.1% (0.95 mM) valine-treated groups showed a disease severity of 2.4 and 2.5, respectively, whereas a disease severity of the water-treated group reached 4.6, indicating that the disease severity in both the 0.5% and 0.1% (0.95 mM) valine-treated groups was significantly reduced. The 1 mM BTH-treated group, BTH known as an induced resistance substance, showed a disease severity of 3.7, indicating that the 0.5% and 0.1% valine-treated groups had more excellent disease resistance effect than the BTH-treated group (FIG. 2).

**Example 3. Verification of induced resistance by valine and isoleucine treatment**

Proline, and valine and isoleucine among branched-chain amino acids (BCAA) were used to verify whether induced resistance reduces the number of pathogens.

To this end, a plant was prepared in the same manner as in Example 1, and treated with amino acids (0.1% valine, 0.1% isoleucine, and 0.1% proline were selected, which were confirmed in Example 2 to have the induced resistance effect at low concentrations) and pathogens.

The number of pathogens was measured by placing the parts of *Arabidopsis thaliana,* excluding the roots, in an e-tube containing beads, grinding them, and then examining the pathogens contained in the juice.

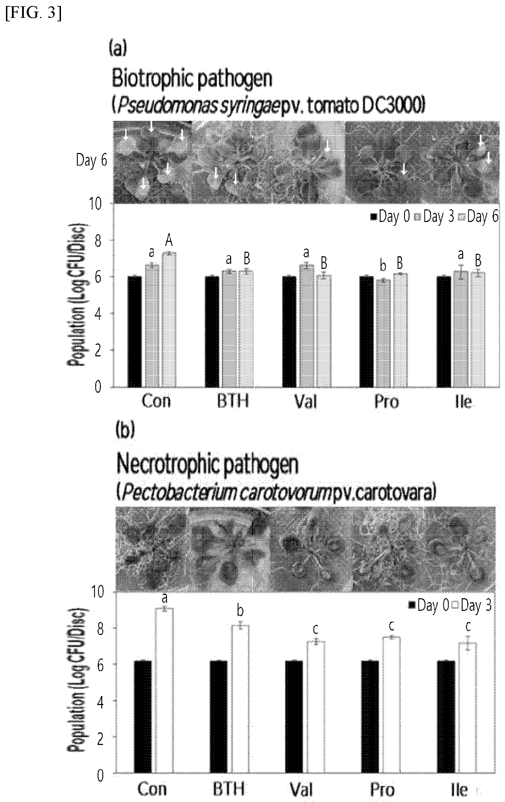

As a result of measuring the number of pathogens on days 3 and 6 after treating the *Arabidopsis thaliana* plant body with the Pst pathogen, it was confirmed that the 0.1% valine-treated group, 0.1% isoleucine-treated group, and 0.1% proline-treated group showed a statistically significant reduction in the number of pathogens on day 6, as compared to the untreated control group (FIG. 3A).

As a result of measuring the number of pathogens on day 3 after treating the *Arabidopsis thaliana* plant body with the Pcc pathogen, it was confirmed that the 0.1% valine-treated group, 0.1% isoleucine-treated group, and 0.1% proline-treated group showed a reduction in the number of Pcc pathogen, as compared to the untreated control group. It was confirmed that the valine, isoleucine, and proline-treated groups also showed a reduction in the number of pathogens, as compared to the BTH-treated group (FIG. 3B).

**Example 4. Verification of gene expression response related to plant disease resistance**

To examine whether or not valine, isoleucine, and proline induce the expression of disease resistance-related genes, *Arabidopsis thaliana* (Denoux et al., Molecular Plant, Volume 1, Number 3, pages 423-445, May 2008) containing Pathogenesis-related protein (PR) 1a promoter GUS fusion construct which is a disease resistance marker gene was used. An *Arabidopsis thaliana* plant was prepared in the same manner as in Example 1, and the roots of *Arabidopsis thaliana* were treated with 50 μl of valine, 50 μl of isoleucine, or 50 μl of proline, respectively. One week after treatment, the expression of the resistance marker gene PR1a was observed through GUS (β-glucuronidase; GUS reporter) activity.

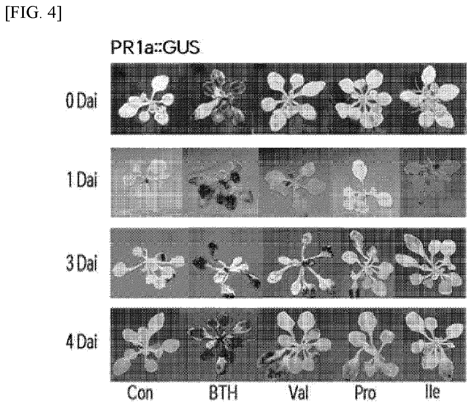

As a result of observation from 1 day after inoculation (Dai) to 4 Dai after pathogen treatment, it was confirmed that GUS was expressed in the leaf area not only in the BTH-treated group but also in the valine, isoleucine, and proline-treated groups, indicating PR1a expression (FIG. 4).

**Example 5. Verification of induced resistance of valine and isoleucine through pot experiment**

Disease resistance was verified again with respect to crops grown in pots.

The surfaces of seeds of eight crops were sterilized by immersing them in 3% sodium hypochlorite (NaOCl) for 5 minutes, respectively. Thereafter, the seeds were rinsed five times using sterile water and then sown in a pot containing bed soil and cultured in a plant incubator (12 hours of light and 23 °C temperature). After growing in pots in the plant incubator (12-hour light culture, 26°C vision) for 3 weeks, 5 ml of each amino acid was sprayed at a concentration of 0.1%. One day after amino acid treatment, pathogens were inoculated as follows, and the control value was calculated.

The procedure was conducted on 9 pathogens for a total of 8 crops (soybean, cucumber, lettuce, rice, tomato, wheat, barley, and pepper), and the target pathogens are as follows: soybean Phytophthora stem and root rot (*Phytophthora sojae*)*,* cucumber bacterial leaf blight (*Pseudomonas syringae pv. lachrymans*)*,* lettuce bacterial soft rot (*Pectobacterium carotovorum pv. carotovora*)*,* rice blast (*Magnaporthe oryzae*)*,* tomato gray mold (*Botrytis cinerea*)*,* tomato late blight (*Phytophthora infestans*)*,* wheat leaf rust (*Puccinia recondite*)*,* barley powdery mildew (*Blumeria graminis f. sp. Hordei*)*,* and pepper anthracnose (*Colletotrichum coccodes*)*.*

a) Soybean Phytophthora stem and root rot

*Phytophthora sojae* strain which is a pathogen of soybean Phytophthora stem and root rot was inoculated in a V8 medium (V8 juice, 1.8% agar); and cultured in an incubator at 25°C for 2 weeks, and the formed spores were harvested with sterile distilled water to prepare a spore suspension ($5.0 \times 10^5$ spores/ml). Soybeans, which were inoculated with the prepared spore suspension by spraying 5 ml thereof per plant, were allowed to develop the disease for 3 days in a constant temperature and humidity room at a temperature of 26°C, and then a diseased area (%) was examined. The diseased area was calculated as follows.

-

Diseased area = Sum of area of diseased leaves/Sum of total leaf area examined $\times$ 100%

b) Cucumber bacterial leaf blight

*Pseudomonas syringae pv. Lachrymans* strain which is a pathogen of cucumber bacterial leaf blight was cultured on a King's B (KB) solid medium at 28°C for 48 hours. 5 ml of the pathogen per plant was treated at a concentration of OD=1 ($10^9$ CFU/ml) by spraying. The inoculated cucumbers were allowed to develop the disease for 3 days in a constant temperature and humidity room at a temperature of 26°C, and then a diseased area (%) was examined.

c) Lettuce bacterial soft rot

*Pectobacterium carotovorum pv. carotovora* strain which is a pathogen of lettuce bacterial soft rot was cultured on a Luria-Bertani broth (LB) solid medium at 28°C for 48 hours. Lettuces were treated with 5 ml of the pathogen per plant at a concentration of OD=1 ($10^9$ CFU/ml) by spraying. The inoculated lettuces were allowed to develop the disease for 1 day in a constant temperature and humidity room at a temperature of 26°C, and then a diseased area (%) was examined.

d) Rice blast

*Magnaporthe oryzae* KI-1113a strain which is a pathogen of rice blast (RCB) was inoculated on a rice polish agar; and cultured in an incubator at 25°C for 2 weeks, and the formed spores were harvested with sterile distilled water to prepare a spore suspension ($5.0 \times 10^5$ spores/ml). Rices, which were inoculated by spraying 5 ml thereof per plant, were left in the dark in a humid room for 24 hours, and allowed to develop the disease for 4 days in a constant temperature and humidity room with a relative humidity of 80% and a temperature of 25°C, and then a diseased area (%) was examined.

e) Tomato gray mold

*Botrytis cinerea* strain which is a pathogen of tomato gray mold (TGM) was inoculated on a potato agar medium; and cultured in an incubator (dark condition) at 20°C, and the formed spores were used as an inoculum. For pathogen inoculation, spores were harvested and the spore concentration was prepared at $5.0 \times 10^5$ spores/ml using a hemocytometer, followed by spraying onto the sample-treated tomato seedlings (2nd to 3rd leaf stage). The inoculated tomato seedlings were left in a humid room (relative humidity of 95% or more) at 20°C to develop the disease for 3 days, and then a diseased area (%) was examined.

f) Tomato late blight

*Phytophthora infestans* strain which is a pathogen of tomato late blight (TLB) was inoculated on an oatmeal medium; and cultured in an incubator at 20°C to form zoosporangia. The formed zoosporangia were harvested by adding sterile distilled water to prepare a spore suspension with a spore concentration of $2.0 \times 10^4$ sporangia/ml, which was treated at low temperature in a refrigerator to release zoospores, thereby preparing a zoospore suspension. The zoospore suspension was spray-inoculated onto sample-treated tomato seedlings (2nd to 3rd leaf stage). Tomato seedlings inoculated with pathogens were treated in a humid room at 20°C for 2 days and were allowed to develop the disease for 2 days in a constant temperature and humidity room, and then a diseased area (%) was examined.

g) Wheat leaf rust

*Puccinia recondite* which is a pathogen of wheat leaf rust (WLR) is a biotrophic pathogen, and thus while performing direct subculture, spores (urediniospores) formed on wheat leaves were used as an inoculum. To investigate the medicinal efficacy, 5 grains of wheat seeds ('Geumgang wheat') were sown in disposable pots (diameter: 4.5 cm), and 1-leaf seedlings grown in a greenhouse for 8 days were treated with samples, and 1 day later, the inoculum (0.67 g/L spores) was inoculated by spraying. The inoculated wheat seedlings were treated in a humid room at 20°C for 1 day, and then transferred to a constant temperature and humidity room with a relative humidity of 70% at 20°C to induce disease development. 7 days after inoculation, a diseased area (%) was examined.

h) Barley powdery mildew

*Blumeria graminis f. sp. Hordei* which is a pathogen of barley powdery mildew (BPM) is a biotrophic pathogen, and thus while performing subculture of barley seedlings, spores formed on barley leaves were used as an inoculum. To investigate the medicinal efficacy, 5 grains of barley seeds ('Hanyoung barley') were sown in disposable pots (diameter: 4.5 cm), and 1-leaf seedlings grown in a greenhouse for 8 days were treated with samples, and air-dried in a greenhouse, and powdery mildew spores were shaken off and inoculated into the sample-treated barley. The inoculated barley seedlings were left in a constant temperature and humidity room with a relative humidity of 50% at 20°C to induce disease development for 7 days. Then, a diseased area (%) was examined.

i) Pepper anthracnose

*Colletotrichum coccodes* which is a pathogen of pepper anthracnose (PAN) was inoculated on an oatmeal medium; and cultured at 25°C for 10 days to form spores. The formed spores were harvested and adjusted to a spore concentration of $5 \times 10^5$ spores/ml to prepare a spore suspension. The spore suspension was spray-inoculated onto sample-treated pepper seedlings (3rd to 4th leaf stage), and left in a humid room (25°C) and treated in a humid room for 2 days, and then were allowed to develop the disease in a constant temperature and humidity room (25°C 80% RH). 3 days after inoculation, a diseased area (%) on the pepper leaves was examined.

From the diseased areas examined as in a) to i), control values were calculated according to the following Equation.

-

Control value (%) = (1 - Diseased area of treated group/Diseased area of untreated group) $\times$ 100

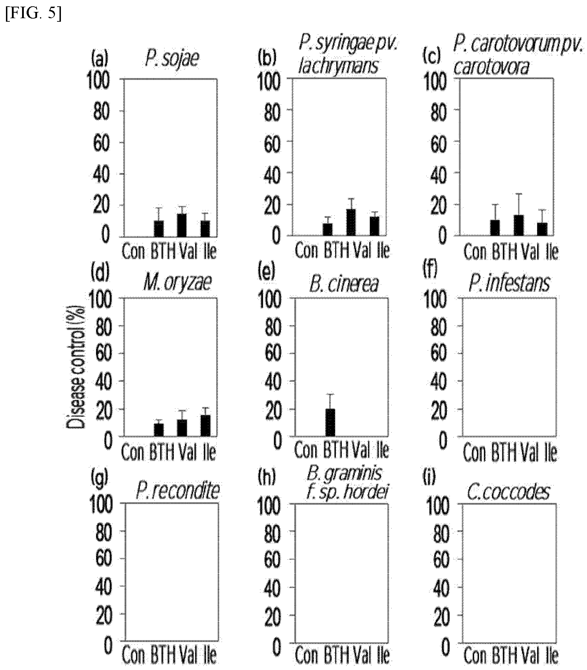

As a result, when induced resistance was tested for 9 pathogens, the control effects were observed in soybean Phytophthora stem and root rot (FIG. 5A), cucumber bacterial leaf blight (FIG. 5B), lettuce bacterial soft rot (FIG. 5C), and rice blast (FIG. 5D), as compared to the untreated group.

The control values of the valine-treated group and the isoleucine-treated group were 15% and 10% for soybean Phytophthora stem and root rot, 17% and 12% for cucumber bacterial leaf blight, 13% and 8% for lettuce bacterial soft rot, and 13% and 16% for rice blast, respectively, as compared to the untreated group.

The control values for soybean Phytophthora stem and root rot, cucumber bacterial leaf blight, lettuce bacterial soft rot, and rice blast were 10%, 9%, 10%, and 9% in the BTH-treated group, which is an induced resistance substance, respectively, as compared to the untreated group. Further, the control values for tomato gray mold was 20% in the BTH-treated group, as compared to the untreated group. In order to increase the induced resistance effect against the pathogens being controlled, the following experiments according to the treatment time and method were conducted.

**Example 6. Investigation of optimal conditions for induced resistance of valine and isoleucine**

To increase the disease control value by valine and isoleucine, the period of induced resistance was changed. A total of 3 crops (soybean, cucumber, lettuce) were tested against 3 pathogens (soybean Phytophthora stem and root rot, cucumber bacterial leaf blight, lettuce bacterial soft rot), and each plant was prepared in the same manner as Example 5.

With regard to the pathogen of soybean Phytophthora stem and root rot, disease severity was observed 7 days after treatment with the pathogen, and the disease severity was scored from 0 to 5, based on the following criteria; 0=no symptoms, 1=1 foliage leaf withered, 2=2 foliage leaves withered, 3=3 foliage leaves withered, 4=4 foliage leaves withered, and 5=severe withering of the entire plant.

With regard to the pathogen of cucumber bacterial leaf blight, disease severity was observed 7 days after treatment with the pathogen, and the disease severity was scored from 0 to 5, based on the following criteria; 0=no symptoms, 1=mild disease symptoms, 2=30% disease symptoms, 3=disease symptoms and mild necrosis, 4=necrosis and 5=severe necrosis and withering.

With regard to the pathogen of lettuce bacterial soft rot, disease severity was observed 48 hours after treatment with the pathogen, and the disease severity was scored from 0 to 5, based on the following criteria; the disease severity was determined according to the criteria of 0=no symptoms, 1=slight soft rot symptoms at the pathogen infection site, 2=soft rot symptoms at the pathogen infection site, 3=severe soft rot symptoms at the pathogen infection site, 4=soft rot symptoms around the pathogen infection site, 5=soft rot symptoms throughout the leaf.

From the disease severity investigated in this manner, a control value was calculated according to the following Equation.

-

Control value (%) = (1 - Disease severity of treated group/Disease severity of untreated group) $\times$ 100

In order to derive the optimal control value for induced resistance, various amino acid treatment periods and frequencies were tested, and ultimately, the first amino acid treatment conducted 7 days before the pathogen treatment and the secondary treatment conducted 1 day before the pathogen treatment resulted in the most excellent induced resistance effect.

The results of the first amino acid treatment 7 days before the pathogen treatment and the second treatment 1 day before the pathogen treatment were as follows.

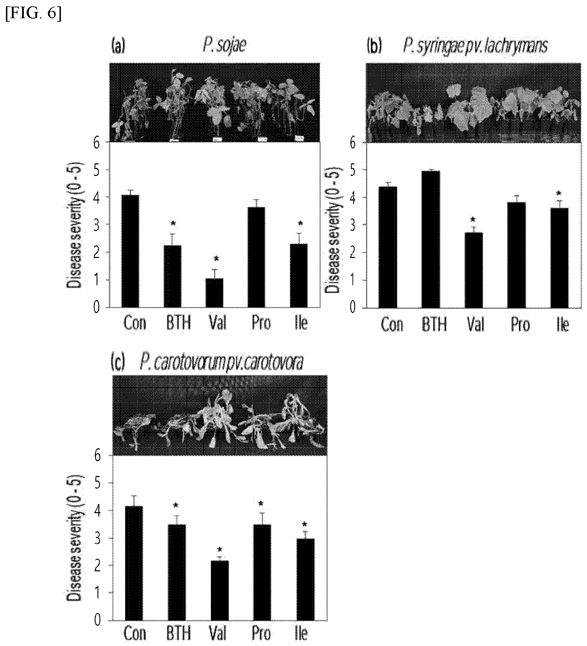

With regard to soybean Phytophthora stem and root rot, the disease severity in the valine-treated group and the isoleucine-treated group was 1.1 and 2.3, respectively, which was lowered, as compared to 4.1 in the water control group. The control values were calculated as 73% and 44%, respectively, compared to the untreated group. It was confirmed that valine induced the better disease control effect than the BTH-treated group, which had a control value of 46%, and isoleucine had the similar control effect as the BTH-treated group (FIG. 6A).

With regard to cucumber bacterial leaf blight, the disease severity in the valine-treated group and the isoleucine-treated group was 2.7 and 3.6, respectively, which was lowered, as compared to 4.4 in the water control group. The control values were calculated as 39% and 18%, respectively, compared to the untreated group. In contrast, it was confirmed that not only disease susceptibility but also growth were inhibited in the BTH-treated group, as compared to the untreated group. Valine and isoleucine have the disease control effect by causing induced resistance against cucumber bacterial leaf blight. Unlike the BTH-treated group that showed growth inhibition when causing induced resistance, no growth inhibition phenomenon was observed in the valine or isoleucine-treated group (FIG. 6B).

With regard to lettuce bacterial soft rot, the disease severity in the valine-treated group and the isoleucine-treated group was 2.2 and 3, respectively, which was lowered, as compared to 4.2 in the water control group. The control values were calculated as 48% and 29%, respectively, compared to the untreated group. The results suggest that the valine-treated group and the isoleucine-treated group had the better disease control effect than the BTH-treated group, which had a control value of 17% (FIG. 6C).

### Example 7. Verification of induced resistance via hyperspectral camera

The induced resistance against Soybean Phytophthora stem and root rot was investigated using a hyperspectral camera and a visible light band camera. Plant preparation was carried out in the same manner as in Example 6, and 7 days after disease treatment, leaves were picked from the same position in each treatment group, and hyperspectral photographs were taken. The hyperspectral camera captured images in the wavelength range of 400 nm to 1000 nm, taking advantage of the fact that healthy and diseased leaves have different wavelength bands, which can be displayed in color. Even when it is difficult to distinguish differences in disease severity with the naked eye, the hyperspectral camera makes it easy.

It was quantified by the normalized difference vegetation index (NDVI). The degree of diseased leaves in the entire leaf area was indicated from 0.1 to 0.9 and the number of the corresponding pixels was used. Generally, when the number is 0.7 or more, it is considered a healthy leaf.

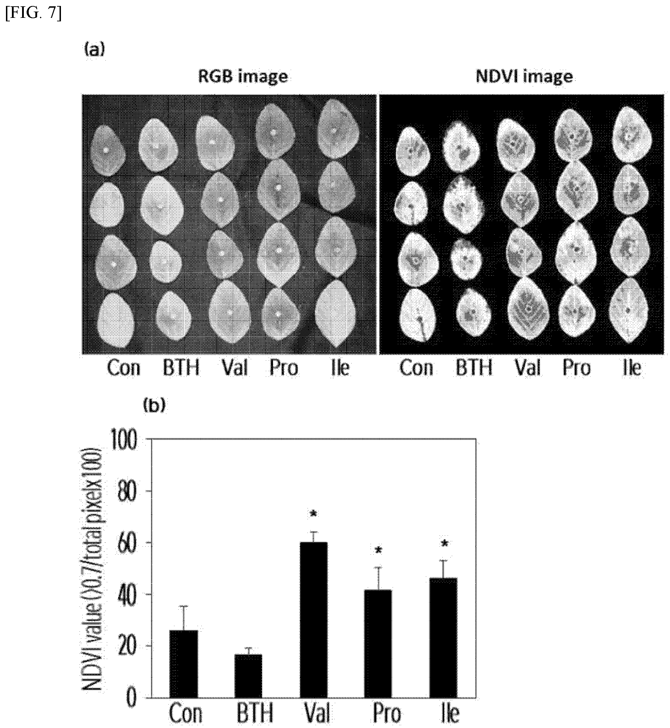

Even in the visible light band, the green color of the untreated group became lighter and the disease progressed more quickly, as compared to the valine-treated group (FIG. 7A, RGB image).

When photographed with the hyperspectral camera, leaves were photographed in different colors depending on the disease severity, in which healthy leaves were green; and the dead leaves were brown (FIG. 7A, NDVI image). In the untreated group, healthy leaves were 26%, whereas the valine-treated group and the isoleucine-treated group had healthy leaves of 60% and 46%, indicating a higher proportion of healthy leaves than the untreated group (FIG. 7B). The hyperspectral camera confirmed again that valine and isoleucine have disease resistance by induced resistance.

### Example 8. Verification of growth promoting ability of valine (not within the present invention)

The growth of soybeans and cucumbers was observed by treatment with valine. One week after sowing in pots, root zone treatment of each plant was performed using 5 ml of valine at a concentration of 0.1%. The root zone treatment with valine was performed twice at one week intervals. Two weeks after the last treatment, a shoot of each treatment group was cut and weighed.

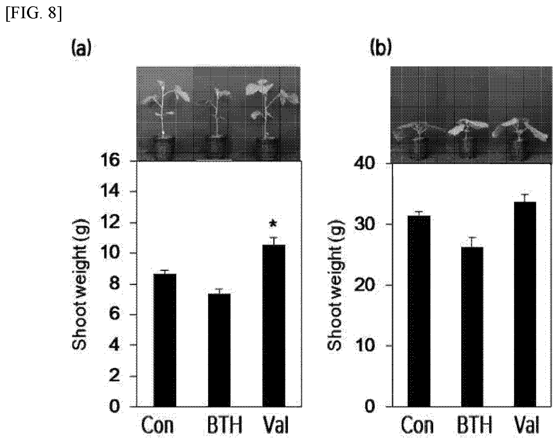

As a result, in the case of soybeans, the valine-treated group was weighed 11 g on average, which was 2.4 g heavier than the untreated group of 8.6 g. In contrast, the BTH-treated group was weighed 7.3 g, showing growth inhibition (FIG. 8A).

In the case of cucumbers, the valine-treated group was weighed 34 g on average, which was 3 g heavier than the untreated group of 31 g. In contrast, the BTH-treated group was weighed 26 g, showing growth inhibition, as compared to the untreated group (FIG. 8B).

The above results suggest that valine also promotes the growth of soybeans and cucumbers.

**Claims**

1. Use of amino acids or a composition comprising amino acids for enhancing plant disease resistance, wherein the amino acids and the plant disease are one of the following combinations:

   i) the amino acids are any one or more selected from the group consisting of isoleucine and valine, and the plant disease is any one or more selected from the group consisting of leaf spot, bacterial soft rot, Phytophthora stem and root rot, and bacterial leaf blight;
   ii) the amino acids are any one or more selected from the group consisting of leucine and proline, and the plant disease is any one or more selected from the group consisting of leaf spot and bacterial soft rot;
   iii) the amino acids are any one or more selected from the group consisting of glutamic acid, aspartic acid, and histidine, and the plant disease is leaf spot.

2. The use of claim **1,** wherein the plant disease of i) is caused by any one or more selected from the group consisting of *Pseudomonas syringae pv. tomato, Pectobacterium carotovorum subsp. carotovorum, Phytophthora sojae,* and *Pseudomonas syringae pv. lachrymans.*

3. The use of claim **1,** wherein the plant disease of ii) is caused by any one or more selected from the group consisting of *Pseudomonas syringae pv. tomato,* and *Pectobacterium carotovorum subsp. carotovorum.*

4. The use of claim **1,** wherein the plant disease of iii) is caused by *Pseudomonas syringae pv. tomato.*

5. The use of claim **1,** wherein the plant is any one or more selected from the group consisting of legumes, fruit vegetables, leafy vegetables, and grains.

6. The use of claim **1,** wherein the amino acids prevent or treat infection of a plant with a pathogen.

7. The use of claim **1,** wherein the amino acids cause systemic induced resistance of a plant.

8. The use of claim **1,** wherein the amino acids do not inhibit plant growth.

9. A method of enhancing plant disease resistance, the method comprising the step of treating a plant body with a composition for enhancing plant disease resistance, wherein the composition comprises amino acids, wherein the amino acids and the plant disease are one of the following combinations:

   i) the amino acids are any one or more selected from the group consisting of isoleucine and valine, and the plant disease is any one or more selected from the group consisting of leaf spot, bacterial soft rot, Phytophthora stem and root rot, and bacterial leaf blight;
   ii) the amino acids are any one or more selected from the group consisting of leucine and proline, and the plant disease is any one or more selected from the group consisting of leaf spot and bacterial soft rot;
   iii) the amino acids are any one or more selected from the group consisting of glutamic acid, aspartic acid, and histidine, and the plant disease is leaf spot.

10. The method of claim **9,** wherein the plant is any one or more selected from the group consisting of legumes, fruit vegetables, leafy vegetables, and grains;

    wherein the composition for enhancing plant disease resistance is treated twice or more;
    wherein the composition for enhancing plant disease resistance is treated at intervals of 3 days to 15 days; or
    wherein the method of enhancing plant disease resistance promotes plant growth.

11. A method of preventing or treating a plant disease, the method comprising the step of treating a plant body with a composition for enhancing plant disease resistance, wherein the composition comprises amino acids, wherein the amino acids and the plant disease are one of the following combinations:

    i) the amino acids are any one or more selected from the group consisting of isoleucine and valine, and the plant disease is any one or more selected from the group consisting of leaf spot, bacterial soft rot, Phytophthora stem and root rot, and bacterial leaf blight;
    ii) the amino acids are any one or more selected from the group consisting of leucine and proline, and the plant disease is any one or more selected from the group consisting of leaf spot and bacterial soft rot;
iii) the amino acids are any one or more selected from the group consisting of glutamic acid, aspartic acid, and histidine, and the plant disease is leaf spot.

**12.** Use of amino acids or a composition comprising amino acids for controlling a plant disease, wherein the amino acids and the plant disease are one of the following combinations:

i) the amino acids are any one or more selected from the group consisting of isoleucine and valine, and the plant disease is any one or more selected from the group consisting of leaf spot, bacterial soft rot, Phytophthora stem and root rot, and bacterial leaf blight;
ii) the amino acids are any one or more selected from the group consisting of leucine and proline, and the plant disease is any one or more selected from the group consisting of leaf spot and bacterial soft rot;
iii) the amino acids are any one or more selected from the group consisting of glutamic acid, aspartic acid, and histidine, and the plant disease is leaf spot.

**13.** A method of controlling a plant disease, the method comprising the step of treating a plant body with a composition for controlling a plant disease, wherein the composition comprises amino acids, wherein the amino acids and the plant disease are one of the following combinations:

i) the amino acids are any one or more selected from the group consisting of isoleucine and valine, and the plant disease is any one or more selected from the group consisting of leaf spot, bacterial soft rot, Phytophthora stem and root rot, and bacterial leaf blight;
ii) the amino acids are any one or more selected from the group consisting of leucine and proline, and the plant disease is any one or more selected from the group consisting of leaf spot and bacterial soft rot;
iii) the amino acids are any one or more selected from the group consisting of glutamic acid, aspartic acid, and histidine, and the plant disease is leaf spot.

**Patentansprüche**

**1.** Verwendung von Aminosäuren oder einer Zusammensetzung, die Aminosäuren umfasst, zum Verbessern der Pflanzenkrankheitsresistenz, wobei die Aminosäuren und die Pflanzenkrankheit eine der folgenden Kombinationen sind:

i) die Aminosäuren sind eine oder mehrere, die aus der Gruppe, bestehend aus Isoleucin und Valin, ausgewählt sind, und die Pflanzenkrankheit ist eine oder mehrere, die aus der Gruppe, bestehend aus Blattflecken, bakterieller Weichfäule, Phytophthora-Stamm und Wurzelfäule, und bakterieller Blattfäule ausgewählt ist;
ii) die Aminosäuren sind eine oder mehrere, die aus der Gruppe, bestehend aus Leucin und Prolin, ausgewählt sind, und die Pflanzenkrankheit ist eine oder mehrere, die aus der Gruppe, bestehend aus Blattflecken und bakterieller Weichfäule, ausgewählt ist;
iii) die Aminosäuren sind eine oder mehrere, die aus der Gruppe bestehend aus Glutaminsäure, Asparginsäure und Histidin ausgewählt sind, und die Pflanzenkrankheit sind Blattflecken.

**2.** Verwendung nach Anspruch **1,** wobei die Pflanzenkrankheit von i) durch eines oder mehr ausgewählt aus der Gruppe bestehend aus *Pseudomonas syringae pv. tomato, Pectobacterium carotovorum subsp. Carotovorum, Phytophthora sojae* und *Pseudomonas syringae pv. lachrymans* bewirkt wird.

**3.** Verwendung nach Anspruch **1,** wobei die Pflanzenkrankheit von ii) durch eines oder mehr ausgewählt aus der Gruppe bestehend aus *Pseudomonas syringae pv. tomato,* und *Pectobacterium carotovorum subsp. Carotovorum* bewirkt wird.

**4.** Verwendung von Anspruch **1,** wobei die Pflanzenkrankheit von iii) durch *Pseudomonas syringae pv. tomato* bewirkt wird.

**5.** Verwendung nach Anspruch **1,** wobei die Pflanze eine oder mehrere aus der Gruppe bestehend aus Hülsenfrüchten, Fruchtgemüse, Blattgemüse und Getreide ausgewählt ist.

**6.** Verwendung nach Anspruch **1,** wobei die Aminosäuren eine Infektion einer Pflanze mit einem Erreger verhindern oder behandeln.

7. Verwendung nach Anspruch **1,** wobei die Aminosäuren eine systemisch induzierte Resistenz einer Pflanze bewirken.

8. Verwendung nach Anspruch **1,** wobei die Aminosäuren das Pflanzenwachstum nicht hemmen.

9. Verfahren zum Verbessern von Pflanzenkrankheitsresistenz, wobei das Verfahren den Schritt zum Behandeln eines Pflanzenkörpers mit einer Zusammensetzung zum Verbessern der Pflanzenkrankheitsresistenz umfasst, wobei die Zusammensetzung Aminosäuren umfasst, wobei die Aminosäuren und die Pflanzenkrankheit eine der folgenden Kombinationen sind:

> i) die Aminosäuren sind eine oder mehrere, die aus der Gruppe, bestehend aus Isoleucin und Valin, ausgewählt sind, und die Pflanzenkrankheit ist eine oder mehrere, die aus der Gruppe, bestehend aus Blattflecken, bakterieller Weichfäule, Phytophthora-Stamm und Wurzelfäule, und bakterieller Blattfäule ausgewählt ist;
> ii) die Aminosäuren sind eine oder mehrere, die aus der Gruppe, bestehend aus Leucin und Prolin, ausgewählt sind, und die Pflanzenkrankheit ist eine oder mehrere, die aus der Gruppe, bestehend aus Blattflecken und bakterieller Weichfäule, ausgewählt ist;
> iii) die Aminosäuren sind eine oder mehrere, die aus der Gruppe bestehend aus Glutaminsäure, Asparginsäure und Histidin ausgewählt sind, und die Pflanzenkrankheit sind Blattflecken.

10. Verfahren nach Anspruch **9,** wobei die Pflanze eine oder mehrere aus der Gruppe bestehend aus Hülsenfrüchten, Fruchtgemüse, Blattgemüse und Getreide ausgewählt ist;

> wobei die Zusammensetzung zum Verbessern der Pflanzenkrankheitsresistenz zweimal oder mehr behandelt wird;
> wobei die Zusammensetzung zum Verbessern der Pflanzenkrankheitsresistenz in Abständen von 3 Tagen bis 15 Tagen behandelt wird; oder
> wobei das Verfahren zum Verbessern der Pflanzenkrankheitsresistenz das Pflanzenwachstum fördert.

11. Verfahren zum Vorbeugen oder Behandeln einer Pflanzenkrankheit, wobei das Verfahren den Schritt zum Behandeln eines Pflanzenkörpers mit einer Zusammensetzung zum Verbessern der Pflanzenkrankheitsresistenz umfasst, wobei die Zusammensetzung Aminosäuren umfasst, wobei die Aminosäuren und die Pflanzenkrankheit eine der folgenden Kombinationen sind:

> i) die Aminosäuren sind eine oder mehrere, die aus der Gruppe, bestehend aus Isoleucin und Valin, ausgewählt sind, und die Pflanzenkrankheit ist eine oder mehrere, die aus der Gruppe, bestehend aus Blattflecken, bakterieller Weichfäule, Phytophthora-Stamm und Wurzelfäule, und bakterieller Blattfäule ausgewählt ist;
> ii) die Aminosäuren sind eine oder mehrere, die aus der Gruppe, bestehend aus Leucin und Prolin, ausgewählt sind, und die Pflanzenkrankheit ist eine oder mehrere, die aus der Gruppe, bestehend aus Blattflecken und bakterieller Weichfäule, ausgewählt ist;
> iii) die Aminosäuren sind eine oder mehrere, die aus der Gruppe bestehend aus Glutaminsäure, Asparginsäure und Histidin ausgewählt sind, und die Pflanzenkrankheit sind Blattflecken.

12. Verwendung von Aminosäuren oder einer Zusammensetzung, die Aminosäuren umfasst, zum Kontrollieren einer Pflanzenkrankheit, wobei die Aminosäuren und die Pflanzenkrankheit eine der folgenden Kombinationen sind:

> i) die Aminosäuren sind eine oder mehrere, die aus der Gruppe, bestehend aus Isoleucin und Valin, ausgewählt sind, und die Pflanzenkrankheit ist eine oder mehrere, die aus der Gruppe, bestehend aus Blattflecken, bakterieller Weichfäule, Phytophthora-Stamm und Wurzelfäule, und bakterieller Blattfäule ausgewählt ist;
> ii) die Aminosäuren sind eine oder mehrere, die aus der Gruppe, bestehend aus Leucin und Prolin, ausgewählt sind, und die Pflanzenkrankheit ist eine oder mehrere, die aus der Gruppe, bestehend aus Blattflecken und bakterieller Weichfäule, ausgewählt ist;
> iii) die Aminosäuren sind eine oder mehrere, die aus der Gruppe bestehend aus Glutaminsäure, Asparginsäure und Histidin ausgewählt sind, und die Pflanzenkrankheit sind Blattflecken.

13. Verfahren zum Kontrollieren einer Pflanzenkrankheit, wobei das Verfahren den Schritt zum Behandeln eines Pflanzenkörpers mit einer Zusammensetzung zum Kontrollieren einer Pflanzenkrankheit umfasst, wobei die Zusammensetzung Aminosäuren umfasst, wobei die Aminosäuren und die Pflanzenkrankheit eine der folgenden Kombinationen sind:

i) die Aminosäuren sind eine oder mehrere, die aus der Gruppe, bestehend aus Isoleucin und Valin, ausgewählt sind, und die Pflanzenkrankheit ist eine oder mehrere, die aus der Gruppe, bestehend aus Blattflecken, bakterieller Weichfäule, Phytophthora-Stamm und Wurzelfäule, und bakterieller Blattfäule ausgewählt ist;

ii) die Aminosäuren sind eine oder mehrere, die aus der Gruppe, bestehend aus Leucin und Prolin, ausgewählt sind, und die Pflanzenkrankheit ist eine oder mehrere, die aus der Gruppe, bestehend aus Blattflecken und bakterieller Weichfäule, ausgewählt ist;

iii) die Aminosäuren sind eine oder mehrere, die aus der Gruppe bestehend aus Glutaminsäure, Asparginsäure und Histidin ausgewählt sind, und die Pflanzenkrankheit sind Blattflecken.

**Revendications**

1. Utilisation d'acides aminés ou d'une composition comprenant des acides aminés pour améliorer la résistance des plantes aux maladies, dans laquelle les acides aminés et la maladie des plantes sont l'une des combinaisons suivantes :

i) les acides aminés sont un ou plusieurs acides aminés choisis parmi le groupe constitué de l'isoleucine et de la valine, et la maladie des plantes est une ou plusieurs maladies choisies parmi le groupe constitué des taches foliaires, de la pourriture molle bactérienne, de la pourriture des tiges et des racines à Phytophthora et de la brûlure foliaire bactérienne ;

ii) les acides aminés sont un ou plusieurs acides aminés choisis parmi le groupe constitué de la leucine et de la proline, et la maladie des plantes est une ou plusieurs maladies choisies parmi le groupe constitué des taches foliaires et de la pourriture molle bactérienne ;

iii) les acides aminés sont un ou plusieurs acides aminés choisis parmi le groupe constitué de l'acide glutamique, de l'acide aspartique et de l'histidine, et la maladie des plantes est les taches foliaires.

2. L'utilisation selon la revendication **1,** dans laquelle la maladie des plantes de i) est causée par un ou plusieurs agents choisis parmi le groupe constitué de *Pseudomonas syringae pv. tomato, Pectobacterium carotovorum subsp. carotovorum, Phytophthora sojae* et *Pseudomonas syringae pv. lachrymans.*

3. L'utilisation selon la revendication **1,** dans laquelle la maladie des plantes de ii) est causée par un ou plusieurs agents choisis parmi le groupe constitué de *Pseudomonas syringae pv. tomato* et *Pectobacterium carotovorum subsp. carotovorum.*

4. L'utilisation selon la revendication **1,** dans laquelle la maladie des plantes de iii) est causée par *Pseudomonas syringae pv. tomato.*

5. L'utilisation selon la revendication **1,** dans laquelle la plante est une ou plusieurs plantes choisies parmi le groupe constitué des légumineuses, des légumes-fruits, des légumes-feuilles et des céréales.

6. L'utilisation selon la revendication **1,** dans laquelle les acides aminés préviennent ou traitent une infection d'une plante par un agent pathogène.

7. L'utilisation selon la revendication **1,** dans laquelle les acides aminés causent une résistance systémique induite chez une plante.

8. L'utilisation selon la revendication **1,** dans laquelle les acides aminés n'inhibent pas la croissance des plantes.

9. Un procédé d'amélioration de la résistance des plantes aux maladies, le procédé comprenant l'étape de traiter un corps végétal avec une composition pour améliorer la résistance des plantes aux maladies, dans laquelle la composition comprend des acides aminés, dans laquelle les acides aminés et la maladie des plantes sont l'une des combinaisons suivantes :

i) les acides aminés sont un ou plusieurs acides aminés choisis parmi le groupe constitué de l'isoleucine et de la valine, et la maladie des plantes est une ou plusieurs maladies choisies parmi le groupe constitué des taches foliaires, de la pourriture molle bactérienne, de la pourriture des tiges et des racines à Phytophthora et de la brûlure foliaire bactérienne ;

ii) les acides aminés sont un ou plusieurs acides aminés choisis parmi le groupe constitué de la leucine et de la proline, et la maladie des plantes est une ou plusieurs maladies choisies parmi le groupe constitué des taches foliaires et de la pourriture molle bactérienne ;

iii) les acides aminés sont un ou plusieurs acides aminés choisis parmi le groupe constitué de l'acide glutamique, de l'acide aspartique et de l'histidine, et la maladie des plantes est les taches foliaires.

10. Le procédé selon la revendication **9,** dans lequel la plante est une ou plusieurs plantes choisies parmi le groupe constitué des légumineuses, des légumes-fruits, des légumes-feuilles et des céréales ;

dans lequel la composition pour améliorer la résistance des plantes aux maladies est appliquée deux fois ou plus;

dans lequel la composition pour améliorer la résistance des plantes aux maladies est appliquée à des intervalles de 3 jours à 15 jours ; ou

dans lequel le procédé d'amélioration de la résistance des plantes aux maladies favorise la croissance des plantes.

11. Un procédé de prévention ou de traitement d'une maladie des plantes, le procédé comprenant l'étape de traiter un corps végétal avec une composition pour améliorer la résistance des plantes aux maladies, dans laquelle la composition comprend des acides aminés, dans laquelle les acides aminés et la maladie des plantes sont l'une des combinaisons suivantes :

i) les acides aminés sont un ou plusieurs acides aminés choisis parmi le groupe constitué de l'isoleucine et de la valine, et la maladie des plantes est une ou plusieurs maladies choisies parmi le groupe constitué des taches foliaires, de la pourriture molle bactérienne, de la pourriture des tiges et des racines à Phytophthora et de la brûlure foliaire bactérienne ;

ii) les acides aminés sont un ou plusieurs acides aminés choisis parmi le groupe constitué de la leucine et de la proline, et la maladie des plantes est une ou plusieurs maladies choisies parmi le groupe constitué des taches foliaires et de la pourriture molle bactérienne ;

iii) les acides aminés sont un ou plusieurs acides aminés choisis parmi le groupe constitué de l'acide glutamique, de l'acide aspartique et de l'histidine, et la maladie des plantes est les taches foliaires.

12. Utilisation d'acides aminés ou d'une composition comprenant des acides aminés pour contrôler une maladie des plantes, dans laquelle les acides aminés et la maladie des plantes sont l'une des combinaisons suivantes :

i) les acides aminés sont un ou plusieurs acides aminés choisis parmi le groupe constitué de l'isoleucine et de la valine, et la maladie des plantes est une ou plusieurs maladies choisies parmi le groupe constitué des taches foliaires, de la pourriture molle bactérienne, de la pourriture des tiges et des racines à Phytophthora et de la brûlure foliaire bactérienne ;

ii) les acides aminés sont un ou plusieurs acides aminés choisis parmi le groupe constitué de la leucine et de la proline, et la maladie des plantes est une ou plusieurs maladies choisies parmi le groupe constitué des taches foliaires et de la pourriture molle bactérienne ;

iii) les acides aminés sont un ou plusieurs acides aminés choisis parmi le groupe constitué de l'acide glutamique, de l'acide aspartique et de l'histidine, et la maladie des plantes est les taches foliaires.

13. Un procédé de contrôle d'une maladie des plantes, le procédé comprenant l'étape de traiter un corps végétal avec une composition pour contrôler une maladie des plantes, dans laquelle la composition comprend des acides aminés, dans laquelle les acides aminés et la maladie des plantes sont l'une des combinaisons suivantes :

i) les acides aminés sont un ou plusieurs acides aminés choisis parmi le groupe constitué de l'isoleucine et de la valine, et la maladie des plantes est une ou plusieurs maladies choisies parmi le groupe constitué des taches foliaires, de la pourriture molle bactérienne, de la pourriture des tiges et des racines à Phytophthora et de la brûlure foliaire bactérienne ;

ii) les acides aminés sont un ou plusieurs acides aminés choisi parmi le groupe constitué de la leucine et de la proline, et la maladie des plantes est une ou plusieurs maladies choisies parmi le groupe constitué des taches foliaires et de la pourriture molle bactérienne ;

iii) les acides aminés sont un ou plusieurs acides aminés choisis parmi le groupe constitué de l'acide glutamique, de l'acide aspartique et de l'histidine, et la maladie des plantes est les taches foliaires.

[FIG. 1]

(a)

Biotrophic pathogen
(*Pseudomonas syringae* pv. tomato DC3000)

(b)

Necrotrophic pathogen
(*Pectobacterium carotovorum* pv. carotovara)

[FIG. 2]

[FIG. 3]

(a)

Biotrophic pathogen
(*Pseudomonas syringae* pv. tomato DC3000)

(b)

Necrotrophic pathogen
(*Pectobacterium carotovorum* pv. carotovara)

[FIG. 4]

PR1a::GUS

0 Dai / 1 Dai / 3 Dai / 4 Dai

Con   BTH   Val   Pro   Ile

[FIG. 5]

[FIG. 6]

(a) *P. sojae*

(b) *P. syringae pv. lachrymans*

(c) *P. carotovorum pv. carotovora*

[FIG. 7]

(a)

(b)

[FIG. 8]

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10123537 B2

- CN 111631219

**Non-patent literature cited in the description**

- **KADOTANI NAOKI et al.** Exogenous proteinogenic amino acids induce systemic resistance in rice. *BMC Plant Biology*, 01 December 2016, vol. 16 (1)

- **DENOUX et al.** *Molecular Plant*, May 2008, vol. 1 (3), 423-445